# EUROPEAN PATENT SPECIFICATION

(11) **EP 2 607 035 B1**
(45) Date of publication and mention of the grant of the patent: **05.07.2017**
(21) Application number: 12197120.4
(22) Date of filing: 14.12.2012
(51) Int. Cl.: B28B 13/04, B65G 49/08

(54) **Method and equipment for treating concrete products**
Verfahren und Vorrichtung zum Behandeln von Betonprodukten
Procédé et équipement de traitement de produits en béton

(30) Priority: 22.12.2011 FI 20116308
(43) Date of publication of application: 26.06.2013
(73) Proprietor: Elematic Oyj, 37801 Akaa (FI)
(72) Inventor: Järvinen, Lassi, 37600 Valkeakoski (FI)
(74) Representative: Berggren Oy, Helsinki & Oulu

(56) References cited:
- WO-A1-99/11442
- DE-A1- 3 927 601
- FR-A1- 2 540 033
- GB-A- 1 136 899
- GB-A- 1 228 886
- NL-A- 7 215 494

## Description

The invention relates to an arrangement for treating prefabricated concrete products or elements, particularly concrete products cast in a mold, after the casting process.

Prefabricated concrete wall elements are typically manufactured by casting in an element factory in molds that can be vertical molds, such as battery molds, or horizontal molds, such as table molds or tripping molds.

When using horizontal molds, such as table and tripping molds, the manufacturing process is started by first forming on the casting bed a mold defining the dimensions of the product to be cast. At present, this is generally carried out by forming the mold by means of sidewall elements that are attached by magnets on a metallic, tiltable casting table. When the mold defining the outer measures of the element to be cast is ready, there are respectively formed, when necessary, areas defined by sidewall elements for instance windows, doors or other corresponding allocations in the casting area of the cast product. Moreover, when necessary, on the casting table, inside the mold, various different devices are arranged for shaping the outer surface of the cast product or otherwise forming allocations required on the outer surface, such as cardboard provided with retarder agent arranged on the casting table when casting graphic concrete. In the final stages of preparing the mold, the mold is provided with necessary reinforcements, whereafter the concrete mix is cast in the mold.

With vertical molds, the forming of the casting mold is carried out substantially in a respective fashion, but in that case the vertical side wall of the mold serves as the fastening surface for the sidewall elements. After forming and preparing the mold, the vertical mold is closed by fixing one of the vertical side walls in place, so that the sidewall elements of the mold are set in between these vertical side walls of the mold and supported against the surfaces of each vertical side wall.

For casting concrete mix in the mold, there is generally used a concrete mix casting equipment that moves on top of the mold and feeds concrete mix in the casting mold. When using a tipping mold, this casting of concrete mix in the mold takes place from casting equipment that is placed on top of the casting table or brought there. In a casting process carried out in a circulating mold line, the movable casting mold is generally brought to a vibrator station, said vibrator station being provided with casting equipment, and the concrete mix is cast in the mold in said vibrator station. With vertical molds, the casting of concrete mix in the mold is carried out typically through the open top surface of the mold from a casting machine that moves above the molds.

When using a tipping mold, the cast concrete product is after curing removed from the casting mold by dismounting part of the mold, by tilting the casting table and by lifting the product from the casting table by means of lifting loops or lugs provided in the product. In a circulating mold line, the mold is transferred to a separate tipping station for removing the cast concrete product from the mold. With vertical molds, the cured concrete product is removed by opening the mold, so that the other vertical side wall of the mold is shifted, and by lifting and/or shifting the concrete product from the mold by means of lifting loops and/or lugs provided in the product.

When the cured concrete product is removed from the casting mold, it is typically subjected to a number of various after-curing operations, such as washing of the product surface in order to reveal or finish the surface formed in the casting process, or for instance for painting the product. For these after-curing operations, the cast concrete product is typically lifted in a separate rack or stand, which can be moved by a separate lifting truck.

A drawback with the described prior art after-curing treatment of concrete products or elements is that the concrete products set in a rack can only be treated on one surface at a time, because the rack supports that are set against the concrete product prevent it from being treated on the side of the support surface. Thus the concrete product must be lifted off the rack, the rack must be shifted to the other side of the product, and the product must be lowered again in the rack in order to be able to perform the after-curing treatment for the opposite surface of the concrete product. This kind of activity occupies both the crane and the rack lifting truck, which is generally very detrimental for the production process of the concrete element factory, because said equipment is typically in continuous use. NL -A- 7 21 5 494 discloses a method for treating prefabricated concrete products according to the preamble of claim 1. GB -A- 1 136 899 discloses a method of manufacturing hollow closed articles of concrete, wherein the concrete articles are hoisted through lifting lugs. WO-A- 99/11442 discloses a method and an apparatus for forming a building panel. The arrangement according to the present invention aims at providing a solution whereby the above described problems of the prior art can be avoided. Moreover, the arrangement according to the invention makes it possible to provide separate after-curing stations or facilities in a concrete factory or in the vicinity thereof, so that the conditions for the after-curing treatment of concrete products are improved, and any problems caused by said after-curing treatment can be minimized. The invention also advantageously offers a possibility for intermediate storage of ready-made concrete products, which in turn releases equipment used in the after-curing treatment and transport of concrete products and thus improves the efficiency in the use of said equipment.

In an arrangement according to the invention, a cured concrete product is lifted from the casting mold to a suitable transfer device, which can be for example a regular after-curing rack or stand for concrete products; the transfer device complete with the concrete product is then shifted to the after-curing treatment station by a suitable lifting and transfer device, such as a translifter lifting truck. According to the invention, the after-curing treatment station is provided with suitable fastening means, such as hooks attached to the ceiling or support structure of the after-curing treatment station. In the after-curing treatment station, the transfer device complete with the concrete element is lifted by a lifting and transfer device to an upper position, so that the fastening means provided in the after-curing treatment station can be fastened to the lifting loops or lugs provided in the concrete product. When the transfer device is thereafter lowered by the lifting and transfer device, the concrete product or products are left suspended from the fastening means provided in the after-curing treatment station, so that the transfer device and the lifting and transfer device can be shifted to perform other tasks.

After the after-curing operations and/or possible intermediate storage of the concrete product, the product suspended in the after-curing treatment station is transferred to storage proper, or to be transferred to the final destination by bringing the transfer device, by means of the lifting and transfer device, to underneath the suspended concrete product. As the lifting and transfer device is lifted to the top position under the concrete product, the concrete product sets in place and is supported against the transfer device, so that the fastening means of the after-curing treatment station can be released from the lifting loops or lugs of the concrete product. Thereafter the transfer device with the concrete product can be lowered down and shifted to storage or to be transferred to the final destination by means of the lifting and transfer device.

In addition to its other advantages, the arrangement according to the invention makes it possible to use the manufacturing equipment of a concrete element factory, particularly the cranes and lifting trucks, efficiently and to minimize the quantity thereof, because the finished products can be efficiently transferred to the after-curing treatment facilities without separate lifting operations carried out by a crane, which means that said operations do not occupy the capacity of said equipment. Moreover, according to a preferred embodiment of the invention, the after-curing treatment facilities can also be used as intermediate storage, which in turn releases after-curing treatment racks and storage racks in the factory to perform other tasks and thus enables a reduction in the quantity thereof.

In an arrangement according to the invention, the fastening means of the after-curing treatment station are attached to the ceiling or support structure of the after-curing treatment station in such a way that they can be shifted for instance along rails. Thus both the fastening means and the concrete products suspended therefrom can be moved in the after-curing treatment station. In addition, the after-curing treatment station is advantageously provided with several fastening means, so that a multiple number of concrete products can be suspended in the after-curing treatment facilities. In that case the shiftable fastening means can be used for shifting several suspended concrete products for example to beside the wall in the after-curing treatment station for intermediate storage.

In an arrangement according to the invention, the after-curing treatment station is advantageously arranged as a closed space, so that the after-curing treatment of concrete products, such as painting or sandblasting, can be carried out in a safe way without stressing the environment.

An after-curing treatment station according to the invention can be advantageously arranged in the interior of a concrete element factory or in an area surrounding the factory, in which case the required space for the after-curing treatment station is easily found irrespective of the available interior space.

In an arrangement according to the invention, the employed lifting and transfer device is advantageously a translifter-type lifting truck. As an alternative, the employed lifting and transfer device can be a pullout trolley in the concrete factory, whereby the said pullout trolley is provided with means for vertically lifting the transfer device with the concrete product placed on top of the trolley. The pullout trolley is typically moved back and forth along a straight passageway, which means that in an arrangement according to the invention, the after-curing treatment station must be arranged at a suitable spot along said passageway, for example at either end of the passageway.

More precisely, the method according to the invention is characterized by what is set forth in the characterizing part of claim 1, and the equipment according to the invention is characterized by what is set forth in the characterizing part of claim 7.

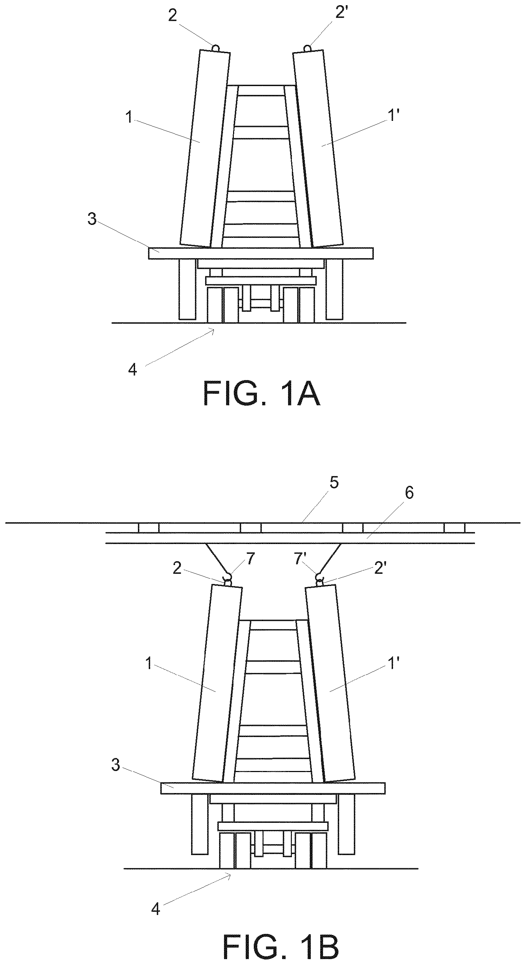

The invention is described in more detail below by way of example with reference to the appended drawings, where
Figures 1A-1C schematically illustrates the successive steps in an arrangement according to the invention.

Figures 1A-1C illustrate schematically the successive steps of an arrangement according to the invention, and the equipment and concrete products are represented as viewed from the rear.

In the situation of Figure 1A, the concrete products 1, 1' are after curing lifted from the casting mold (not illustrated) with a crane, by means of lifting loops 2, 2' to a transfer rack 3, which is a typical rack used in concrete factories for transferring concrete products, in after-curing treatment and/or storage of said products. After placing the concrete products 1, 1' in the transfer rack 3, the transfer rack is lifted by a lifting truck 4, which is brought to below the transfer rack, or the lifting truck has been waiting under the transfer rack for the lifting of the concrete product to the transfer rack. In the example of the drawings, the lifting truck 4 is a known translifter lifting truck. In the situation illustrated in Figure 1A, the transfer rack 3, complete with the concrete product 1,1', can be transferred by transferring the lifting truck 4.

In the situation of Figure 1B, the transfer rack 3, complete with the concrete product 1, 1', is brought with the lifting truck 4 to the after-curing treatment station or location, in the ceiling or support structure 5 whereof there are attached rails 6, and said rails are provided with hooks 7, 7', which are attached to be shifted by intermediation of the rails 6. The transfer rack 3 is lifted by the lifting truck 4 at a defined height, in order to enable the placing of the hooks 7, 7' in the lifting loops 2, 2' provided in the concrete products 1, 1'. Thus the concrete products 1, 1' are attached to the fastening means formed in the after-curing treatment station.

A suitable length of cable wire or chain is arranged between the hooks 7, 7' and the rails 6. Said piece of cable wire or chain can also be adjustable in length, in order to be able to place the hooks 7, 7' at a suitable height for concrete products with varying sizes.

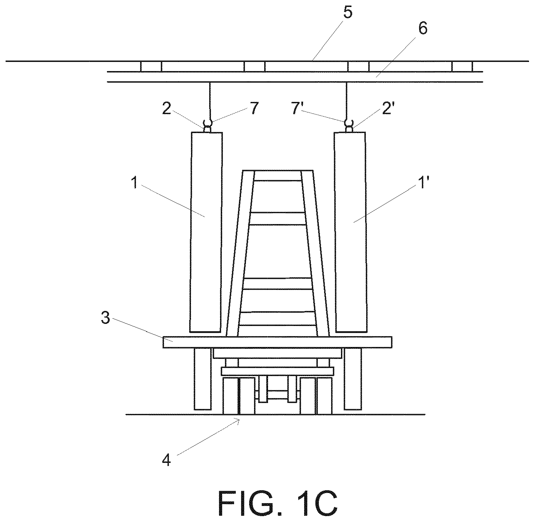

In the situation of Figure 1C, the transfer rack 3 has been lowered by the lifting truck 4, so that the concrete products 1, 1' remain suspended from the hooks 7, 7', and the transfer rack 3 can be shifted, by means of the lifting truck 4, to wait for transferring the next cured concrete products from the mold to the transfer rack. The concrete products 1, 1' suspended in the after-curing treatment station can in turn be transferred, by intermediation of the rails 6, either to further treatment or to intermediate storage.

The after-curing treatment station illustrated in Figures 1B and 1C is formed as a space that can be closed by means of walls, ceiling and doors that can be shut, so that the emission of harmful substances, such as paint or other finishing agents, to outside the after-curing treatment station can be prevented.

As regards the preferred embodiment described in the drawings and the specification above, it is pointed out that said embodiment should not be considered in any way restrictive to the invention. The scope of the invention is defined in the appended claims.

## Claims

1. A method for treating prefabricated concrete products (1, 1'), in which method a cured concrete product is lifted from the casting mold to transfer devices (3) and shifted by said transfer devices (3) to an after-curing treatment station, whereby in the after-curing treatment station, the concrete product is hoisted by lifting the transfer devices (3); **characterised in that** the concrete product (1, 1') is fastened at its lifting loops or lugs (2, 2') to fastening means (7, 7') provided in the after-curing treatment station; and the transfer devices are lowered down and shifted away, so that the concrete product remains suspended in the after-curing treatment station for further treatment of said product.

2. A method according to claim 1, **characterized in that** the after-curing treatment station also serves as intermediate storage for the concrete product (1, 1').

3. A method according to claim 1 or 2, **characterized in that** the concrete product (1, 1') suspended from the fastening means (7, 7') is in the after-curing treatment station shifted by shifting the fastening means provided in the after-curing treatment station.

4. A method according to any of the claims 1-3, **characterized in that** several concrete products (1, 1') are suspended in the same after-curing treatment station by means of several fastening means (7, 7') provided in said after-curing treatment station.

5. A method according to any of the claims 1-4, **characterized in that** the after-curing treatment station is closed in order to form a closed space for performing after-curing treatment operations for the suspended concrete products (1, 1').

6. A method according to any of the claims 1-5, **characterized in that** the concrete product (1, 1') is removed from the after-curing treatment station by bringing the transfer devices (3) to below the suspended concrete product, whereafter the transfer devices (3) are lifted, so that the concrete product is set in place and supported against the transfer devices (3); the concrete product is released from the fastening means (7, 7') of the after-curing treatment station, lowering the transfer devices and the concrete product placed thereon; and the concrete product is transferred, by intermediation of the transfer devices (3), away from the after-curing treatment station.

7. Equipment for treating prefabricated concrete products (1, 1'), said equipment comprising means for lifting a cured concrete product from the mold to transfer devices (3) transfer devices (3) and lifting and transfer devices (4) for shifting the transfer devices (3) to an after-curing treatment station, **characterized in that** the equipment comprises fastening means (7, 7') arranged in the after-curing treatment station for suspending the concrete product (1, 1') via its lifting loops or lugs (2, 2') in the after-curing treatment station for further treatment of said concrete product.

8. Equipment according to claim 7, **characterized in that** the fastening means (7, 7') of the after-curing treatment station are arranged to be movable in the station.

9. Equipment according to claim 7 or 8, **characterized in that** several fastening means (7, 7') are provided in the after-curing treatment station for suspending several concrete products (1, 1') for after-curing treatment or intermediate storage.

10. Equipment according to any of the claims 7-9, **characterized in that** the after-curing treatment station provided with fastening means (7, 7') is formed as a space that can be closed.

11. Equipment according to any of the claims 7-10, **characterized in that** the fastening means provided in the after-curing treatment station comprise hooks (7, 7') attached to the ceiling (5) or support structure (6) of the after-curing treatment station, that the transfer devices (3) is a regular after-curing treatment or storage rack for concrete products, and that the lifting and transfer device of the transfer devices (3) is a translifter-type lifting truck (4).

## Patentansprüche

1. Verfahren zum Behandeln von Betonfertigprodukten (1, 1'), wobei in dem Verfahren ein ausgehärtetes Betonprodukt von der Gießform zu Überführungseinrichtungen (3) gehoben und durch die Überführungseinrichtungen (3) zu einer Station für die Behandlung nach dem Härten verschoben wird, wobei das Betonprodukt in der Station für die Behandlung nach dem Härten durch Heben der Überführungseinrichtungen (3) hochgezogen wird; **dadurch gekennzeichnet, dass** das Betonprodukt (1, 1') an seinen Hebeschlaufen oder -ösen (2, 2') an Befestigungsmitteln (7, 7'), die in der Station für die Behandlung nach dem Härten bereitgestellt sind, befestigt wird; und die Überführungseinrichtungen abgesenkt und weggeschoben werden, sodass das Betonprodukt zur weiteren Behandlung des Produktes in der Station für die Behandlung nach dem Härten aufgehängt verbleibt.

2. Verfahren nach Anspruch 1, **dadurch gekennzeichnet, dass** die Station für die Behandlung nach dem Härten auch als Zwischenlager für das Betonprodukt (1, 1') dient.

3. Verfahren nach Anspruch 1 oder 2, **dadurch gekennzeichnet, dass** das Betonprodukt (1, 1'), das von den Befestigungsmitteln (7, 7') herabhängt, in der Station für die Behandlung nach dem Härten durch Verschieben der Befestigungsmittel, die in der Station für die Behandlung nach dem Härten bereitgestellt sind, verschoben wird.

4. Verfahren nach einem von Anspruch 1 bis 3, **dadurch gekennzeichnet, dass** mehrere Betonprodukte (1, 1') in derselben Station für die Behandlung nach dem Härten mithilfe von mehreren Befestigungsmitteln (7, 7'), die in der Station für die Behandlung nach dem Härten bereitgestellt sind, aufgehängt werden.

5. Verfahren nach einem von Anspruch 1 bis 4, **dadurch gekennzeichnet, dass** die Station für die Behandlung nach dem Härten geschlossen wird, um einen geschlossenen Raum zum Durchführen von Behandlungsvorgängen nach dem Härten für die aufgehängten Betonprodukte (1, 1') zu bilden.

6. Verfahren nach einem von Anspruch 1 bis 5, **dadurch gekennzeichnet, dass** das Betonprodukt (1, 1') durch Bringen der Überführungsmittel (3) unter das aufgehängte Betonprodukt aus der Station zur Behandlung nach dem Härten entfernt wird, wonach die Überführungseinrichtungen (3) gehoben werden, sodass das Betonprodukt platziert und an die Überführungseinrichtungen (3) gelehnt wird; dass das Betonprodukt von den Befestigungsmitteln (7, 7') der Station für die Behandlung nach dem Härten gelöst wird, indem die Überführungseinrichtungen und das Betonprodukt, das sich darauf befindet, gesenkt werden; und das Betonprodukt durch Vermittlung der Überführungseinrichtungen (3) von der Station für die Behandlung nach dem Härten weggeführt wird.

7. Vorrichtung zum Behandeln vorgefertigter Betonprodukte (1,1'), wobei die Vorrichtung Mittel zum Heben eines ausgehärteten Betonproduktes von der Form zu Überführungseinrichtungen (3), Überführungseinrichtungen (3) und Hebe- und Überführungseinrichtungen (4) zum Verschieben der Überführungseinrichtungen (3) zu einer Station für die Behandlung nach dem Härten aufweist, **dadurch gekennzeichnet, dass** die Vorrichtung Befestigungsmittel (7, 7') aufweist, die in der Station für die Behandlung nach dem Härten zum Aufhängen des Betonproduktes (1, 1') mittels dessen Hebeschlaufen oder -ösen (2, 2') in der Station für die Behandlung nach dem Härten zur weiteren Behandlung des Betonproduktes angeordnet sind.

8. Vorrichtung nach Anspruch 7, **dadurch gekennzeichnet, dass** die Befestigungsmittel (7, 7') der Station für die Behandlung nach dem Härten angeordnet sind, um in der Station beweglich zu sein.

9. Vorrichtung nach Anspruch 7 oder 8, **dadurch gekennzeichnet, dass** in der Station für die Behandlung nach dem Härten mehrere Befestigungsmittel (7, 7') zum Aufhängen mehrerer Betonprodukte (1, 1') zur Behandlung nach dem Härten oder deren Zwischenlagerung bereitgestellt sind.

10. Vorrichtung nach einem von Anspruch 7 bis 9, **dadurch gekennzeichnet, dass** die Station für die Behandlung nach dem Härten, die mit Befestigungsmitteln (7, 7') bereitgestellt ist, als ein Raum gebildet ist, der geschlossen werden kann.

11. Vorrichtung nach einem von Anspruch 7 bis 10, **dadurch gekennzeichnet, dass** die Befestigungsmittel, die in der Station für die Behandlung nach dem Härten bereitgestellt sind, Haken (7, 7') aufweisen, die an der Decke (5) oder Tragstruktur (6) der Station für die Behandlung nach dem Härten angebracht sind, dass die Überführungseinrichtungen (3) ein normales Gestell für die Behandlung nach dem Härten oder Lagerung für Betonprodukte sind und dass die Hebe- und Überführungseinrichtung der Überführungseinrichtungen (3) ein Hubwagen vom Translifter-Typ (4) ist.

## Revendications

1. Procédé de traitement de produits en béton préfabriqués (1, 1'), dans lequel un produit en béton durci est levé depuis le moule de coulage vers des dispositifs de transfert (3) et déplacé par lesdits dispositifs de transfert (3) vers une station de traitement d'après durcissement selon lequel dans la station de traitement d'après durcissement, le produit en béton est hissé en levant les dispositifs de transfert (3) ; **caractérisé en ce que** le produit en béton (1, 1') est attaché à ses boucles ou à ses pattes de levage (2, 2') pour attacher des moyens (7, 7') fournis dans la station de traitement d'après durcissement ; et les dispositifs de transfert sont abaissés et écartés, de sorte que le produit en béton reste suspendu dans la station de traitement d'après durcissement pour un traitement ultérieur dudit produit.

2. Procédé selon la revendication 1, **caractérisé en ce que** la station de traitement d'après durcissement sert également en tant que stockage intermédiaire du produit en béton (1, 1').

3. Procédé selon la revendication 1 ou la revendication 2, **caractérisé en ce que** le produit en béton (1, 1') suspendu à partir des moyens d'attache (7, 7') est dans la station de traitement d'après durcissement décalé en décalant les moyens d'attache fournis dans la station de traitement d'après durcissement.

4. Procédé selon l'une quelconque des revendications 1 à 3, **caractérisé en ce que** de nombreux produits en béton (1, 1') sont suspendus dans la même station de traitement d'après durcissement au moyen de nombreux moyens d'attache (7, 7') fournis dans ladite station de traitement d'après durcissement.

5. Procédé selon l'une quelconque des revendications 1 à 4, **caractérisé en ce que** la station de traitement d'après durcissement est fermée de façon à former un espace clos pour effectuer des opérations de traitement d'après durcissement pour les produits en béton suspendus (1, 1').

6. Procédé selon l'une quelconque des revendications 1 à 5, **caractérisé en ce que** le produit en béton (1, 1') est éliminé de la station de traitement d'après durcissement en amenant les dispositifs de transfert (3) en dessous du produit en béton suspendu, après quoi les dispositifs de transfert (3) sont élevés, de sorte que le produit en béton reste en place et est soutenu contre les dispositifs de transfert (3) ; le produit en béton est libéré des moyens d'attache (7, 7') de la station de traitement d'après durcissement, abaissant les dispositifs de transfert et le produit en béton placé sur ceux-ci ; et le produit en béton est transféré, par l'intermédiaire de dispositifs de transfert (3), loin de la station de traitement d'après durcissement.

7. Équipement destiné au traitement de produits en béton préfabriqués (1, 1'), ledit équipement comprenant des moyens pour lever un produit en béton durci à partir du moule vers des dispositifs de transfert (3) et pour lever des dispositifs de transfert (4) et pour décaler les dispositifs de transfert (3) vers une station de traitement d'après durcissement, **caractérisé en ce que** l'équipement comprend des moyens d'attache (7, 7') agencés dans la station de traitement d'après durcissement pour suspendre le produit en béton (1, 1') par l'intermédiaire de ses boucles ou de ses pattes de levage (2, 2') dans la station de traitement d'après durcissement pour un traitement ultérieur dudit produit en béton.

8. Équipement selon la revendication 7, **caractérisé en ce que** les moyens d'attache (7, 7') de la station de traitement d'après durcissement sont agencés pour être déplaçables dans la station.

9. Équipement selon la revendication 7 ou la revendication 8, **caractérisé en ce que** de nombreux moyens d'attache (7, 7') sont fournis dans la station de traitement d'après durcissement pour suspendre de nombreux produits en béton (1, 1') pour un traitement d'après durcissement ou pour un stockage intermédiaire.

10. Équipement selon l'une des revendications 7 à 9, **caractérisé en ce que** la station de traitement d'après durcissement fournie avec des moyens d'attache (7, 7') est formée en tant qu'espace qui peut être clos.

11. Équipement selon l'une des revendications 7 à 10, **caractérisé en ce que** les moyens d'attache fournis dans la station de traitement d'après durcissement comprennent des crochets (7, 7') attachés au plafond (5) ou à une structure de soutien (6) de la station de traitement d'après durcissement, que les dispositifs de transfert (3) consistent en un traitement d'après durcissement régulier ou en un support de rangement pour des produits en béton, et que le levage et le dispositif de transfert des dispositifs de transfert (3) consiste en un chariot élévateur de type « translifter » (4).
